# EUROPEAN PATENT APPLICATION

(11) **EP 2 322 035 A1**
(43) Date of publication of application: **18.05.2011**
(21) Application number: 10386018.5
(22) Date of filing: 03.11.2010
(51) Int. Cl.: A01K 47/06, A01M 1/10

(54) **Hive base accompanied by a sliding suitcase-trap**

(30) Priority: 12.11.2009 GR 20090100632
(71) Applicant: Ifantidis, Michael, 54352 Thessaloniki (GR)
(72) Inventor: Ifantidis, Michael, 54352 Thessaloniki (GR)

(57) **Abstract**

It is a hive base accompanied by a sliding suitcase -trap, that is used in the entrappment and extermination of the enemies of the hive such as wasps, the small hive beetle (SHB), the robber bees, as well as many other unwanted for the bee-keeper animal invaders (snakes, centipedes, etc.).

The entrappment of the insects is actually achieved by the existence of four cone-shaped entrances (valves) -12a- and -12b-, upon the vestibules and their lateral rooms and upon the 8 relevant entrances- valves -12- inside the sliding suitcase- trap.

## Description

The invention refers to the construction of a hive base, accompanied by a sliding suitcase-trap that is used for the entrapment and extermination of enemies of the hive such as wasps, the small hive beetle (SHB, scientifically named as *Aethina tumida*), the robber bees, as well as many other unwanted for the bee-keeper animal invaders of the bee colony.

The cone-shaped entrances-valves, typical in any insect-trap, are no longer incorporated in the walls of the hive-base, but in the walls of the sliding suitcase-trap, making its removal and restoration comfortable, every time it is necessary. The metal, perforated cover of the suitcase-trap proves to be insect-tight (effective even in the case of adults of the SHB) and is also accompanied by a sliding mechanism.

### Advantages of the suitcase- trap

### a) Regarding organisms using venom (wasps, etc.)

Till now, no hive base accompanied by a sliding suitcase-trap has been used. Only a drawer has been used in that kind of a construction, which however is inferior to our invention in that the still alive entrapped wasps are not deprived of the ability to fly and sting the human being. This can also be applied for any entrapped reptiles (small-sized snakes, centipedes etc.). In order to prevent such risky for the bee-keeper events from happening, he/she is able to execute the still alive and entrapped in the sealed suitcase-trap wasps by use of a blowtorch, which is widely used in the practice of bee-keeping in order to disinfect the wooden parts of the hive.

### b) Regarding the small hive beetle (SHB)

By use of the sliding suitcase-trap the entrapped *tumida* adults are no longer granted access to the also metallic and perforated, insect-tight top of the base (which also serves as bottom of the hive). Thus, in case the female beetles lay eggs while in captivity, inside the suitcase-trap, their eggs may be layed at the inner ceiling of the suitcase-trap, but in no case at the corresponding surface of the above situated ceiling of the base hive. From the ceiling of the suitcase-trap the eggs of the small hive beetle can be simply, easily and in whole executed along with the entrapped wasps and other type of invaders by use of a blowtorch every three days at maximum, which is the expected period of time for hatching. In seasons with no wasps or reptiles co-existing inside the suitcase-trap, the execution of the produced egg-layings of the SHB in the ceiling of the suitcase-trap may be alternatively implemented by use of a moist cloth soaked in a quantity of a typical hand detergent.

This kind of capability is not offered in the case of a base-trap, because the removal of its mobile, perforated ceiling unconditionally presupposes the laborious and time-consuming removal of the above situated brood chamber. Additionaly, the diminutive tumida larvae, once hatched, would immediately penetrate the unique perforated diaphragm, which constitutes the ceiling of the base-trap accompanied by a drawer (at the same time functioning as the bottom of the hive upon which bees move) and would subsequently invade the bee colony. On the other hand, in my own invention the hatched (in case that the bee-keeper neglects the issue of executing the egg-layings every three days) larvae would delay in finding the way to climb to the bottom of the hive, which is a few millimetres far from the inner ceiling of the sliding suitcase-trap and would possibly famish before reaching the bottom of the hive. In the case of my own invention, the ceiling of the hive base-trap is also permanently attached to its walls, resulting in the greater resistance of the base to mechanical pressures.

### c) Regarding the indigenous honeybees

The flying honeybees originally orientate themselves according to the position of their hive, every time the beekeeper transports his bee colonies into a new location. During the orientation process, a number of honeybees may be disorientated while returning to the hive and pass through the cone-shaped entrances-valves, with no way out. Such a risky event is apparently real for the case of the indigenous bees and in case the beekeeper reposes a honeycomb or a brood comb full of bees in the hive. The same possibility of entrapment applies as well for the total number of flying honeybees of his/her bee colonies and in cases where the beekeeper is obliged to supply (mostly with syrup) his bee colonies, in extended periods of drought, with no alternative solution to transport them in blooming locations. This is the reason why the entrances of the base-trap should be sealed in such cases by self-adhesive tapes.

Now, entrance blocking is implemented by use of seal barriers which remain in the suitcase tself, after being used.

Moreover, the use of seal bariers characterized by holes of 3,5 mm ensures the airing of the bee colonies.

The seal barriers further ensure the entrapment of the nocturnal SHB from the first night after the bee colonies are transported to a new location. In this case, the self-adhesive tapes would prevent the small hive beetles from being entraped, for as Ions as the beekeeper had to visit his bee colonies after their transportation. Thus, the small hive beetles would subsequently crowd in front of the unique entrance (of this particular hive), with great possibility to to force it, even if it is "shielded" in any manner.

The entrance of the hive may be of a regular kind or even reinforced by a specialised, preferably stainless structure, which is probably neccessary in locations dominated by the *A. tumida* beetles. Regarding locations with no *A. tumida* beetles, the cost of constructing a hive-base accompanied by a sliding suitcase-trap is reduced for the following reasons:
- No special structure is required in front of the entrance of the hive.
- There is no need to punch the back side of the sliding suitcase-trap in order to install the relevant metal cone-shaped entrances (valves).
- The wooden vertical diaphragm as an extension of the back side of the suitcase leading to the ceiling of the hive base is no longer necessary.

### A comprehensive depiction is given by reference to the atteched sketches:

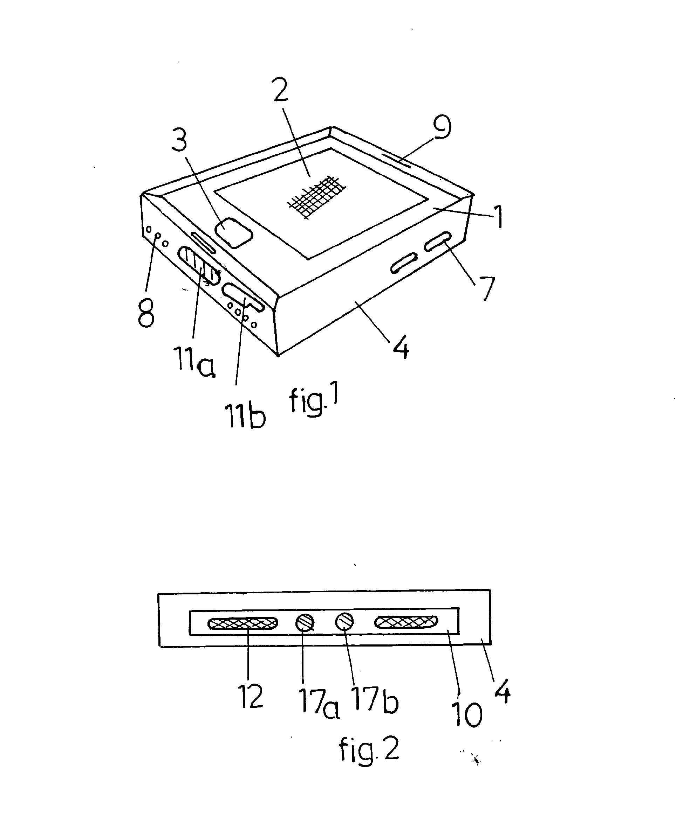

In figure 1 the hive base is seen in perspective, with the sliding suitcase-trap incorporated.

In figure 2 we can see the external back side of the hive-base accompanied by the sliding suitcase.

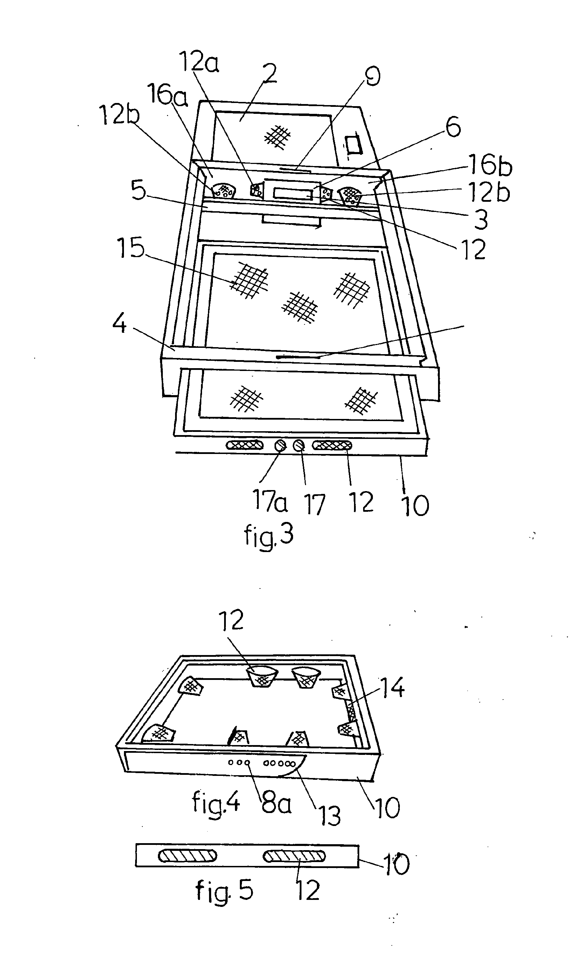

In figure 3 the hive base is seen in perspective, along with the individual components of the sliding suitcase-trap, out of function mode.

In figure 4 the sliding suitcase-trap is seen out of its normal position, with the ceiling removed.

In figure 5 the (external) back side of the suitcase-trap is seen in perspective.

With reference to the attached sketches, the hive-base accompanied by the sliding suitcase-trap is made up of:
The main part of the base -4- bearing a frame -1- on its top part, which in turn bears a metal plexus -2- and the hatch -3- serving as an entrance to the hive. In the inner part of the base there is a longitudinal vertical diaphragm - 5- fixed at the "propylea" -6- which are characterized by two cone-shaped entrances-valves -12a- and the hatch -3-. Externally (facade of the base) there is a line of apertures of a diameter of 3,5mm -8-, leading the SHB and the wax moth to the interior of the base, through the cone-shaped entrances-valves -12b-, to the two vestibules -16a- and -16b- (at the right and left side of the "propylea").

In the front side (facade) of the base there is also the entrance -11a-which leads to the hatch -3- and is sealed by a seal barrier -11 b-. Finally, there are sockets -9- for the cotter pins, which connect the hive base with the brood-chamber, ensuring the automated and absolute fitting of the hive base to the brood chamber, when the last is placed upon the base. This kind of automation perfectly prevents the emergence of temporary gaps (apart from the one of the regular entrance) through which the honeybees learn to come across. As soon as the regular position of the brood-chamber, upon the base , is retrieved and the temporary entrances are sealed, the honeybees enter the trap and are exterminated. On the sides of the base there are openings-entrances -7- (two per side), leading to the relevant openings-entrances -12- of the suitcase-trap.

Inside the base nestles the sliding suitcase-trap -10-, bearing a metal bee-tight plexus -15- on its top, serving for the airing of the honeybee colony. The handles - 17a- , - 17b- bear from the inside an insect-tight plexus -14-. Beside them there are two cone-shaped entrances-valves -12-, leading the invaders in captivity. Finally, there are the lateral seal barriers -13- characterized by apertures -8a-.

## Claims

1. A base of a bee hive accompanied by a sliding suitcase-trap that is used for the entrappment and extermination of the enemies of the hive such as wasps, the small hive beetle (SHB), the robber bees, as well as many other unwanted for the bee-keeper animal invaders.
The construction is made up of: The main part of the base -4- bearing on its top a frame -1- including a metal plexus -2- and the hatch/entrance of the hive -3-. In the interior of the base there is a longitudinal vertical diaphragm -5- fixed at the "propylea" -6- bearing in turn two cone-shaped entrances-valves -12a-.and -12b- upon holew of 3.5mm. In the external part of the base there are two apertures of a diameter of 3,5 mm -8- leading to the interior into the two vestibules -16a and -16b- (right and left of the "propylea") which in turn lead the "visitors" to the cone-shaped entrances/valves -12b-.
In the front side of the base there is the entrance -11 a- which is sealed by a flat valve -11 b-. Finally, there are also the sockets -9- for the cotter pins that connect the base with the brood-chamber. Laterally, there are entrances -7- that lead to the suitcase.
Inside the base nestles the sliding suitcase-trap -10-, bearing on its top a metal insect tight plexus -15- serving for the airing of the honeybee colony, the handles -17a- and -17b- which from the inside bear an insect tight plexus -14-, the cone-shaped entrances/traps -12- which lead the invaders in captivity, the lateral seal barriers -13- including the apertures -8a-
